(19)

Europäisches
Patentamt
European
Patent Office
Office européen
des brevets

(11) **EP 4 074 673 A1**

(12) **EUROPEAN PATENT APPLICATION**

(43) Date of publication:
**19.10.2022 Bulletin 2022/42**

(21) Application number: **22167570.5**

(22) Date of filing: **11.04.2022**

(51) International Patent Classification (IPC):
**C04B 35/486** (2006.01)  **C01G 25/02** (2006.01)
**C04B 35/488** (2006.01)  **C04B 35/626** (2006.01)

(52) Cooperative Patent Classification (CPC):
**C04B 35/486; C01G 25/02; C04B 35/4885;
C04B 35/6262; C04B 35/62675;** C04B 2235/3224;
C04B 2235/3225; C04B 2235/3246;
C04B 2235/604; C04B 2235/6567; C04B 2235/77;
C04B 2235/96

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **12.04.2021  JP 2021067398
27.07.2021  JP 2021122113**

(71) Applicant: **Tosoh Corporation
Yamaguchi 746-8501 (JP)**

(72) Inventors:
• **Kawamura, Kenta
  Shunan, 746-8501 (JP)**
• **Fukiage, Taku
  Shunan, 746-8501 (JP)**
• **Nishiyama, So
  Shunan, 746-8501 (JP)**
• **Nagayama, Hitoshi
  Shunan, 746-8501 (JP)**

(74) Representative: **Müller-Boré & Partner
Patentanwälte PartG mbB
Friedenheimer Brücke 21
80639 München (DE)**

(54) **SINTERED BODY**

(57)    To provide a sintered body that has improved impact resistance by absorbing an impact exceeding the fracture resistance of the sintered body before brittle fracture occurs.

A sintered body comprising: zirconia containing a stabilizing element; and a plastic deformation region, wherein the stabilizing element includes at least one rare-earth element other than yttrium, and the stabilizing element content is 1.5% or more by mole and less than 3.0% by mole.

EP 4 074 673 A1

**Description**

BACKGROUND OF THE INVENTION

1. Field of the Invention

The present disclosure relates to a sintered body and more particularly to a sintered body with high impact resistance composed mainly of zirconia.

2. Description of the Related Art

Sintered bodies with a zirconia matrix are being considered for decorative applications, such as exterior material for clocks and watches, portable electronic devices, automobiles, home appliances and the like, in addition to conventional applications that require strength, such as grinding media and structural materials. Sintered bodies for decorative applications are required to have high strength and toughness to prevent fracture by external impact. Various sintered bodies with high strength and toughness have been reported as highly reliable materials.

For example, Japanese Unexamined Patent Application Publication No. 2017-226555 reports a zirconia-alumina complex sintered body formed by microwave sintering of a mixed powder of a 3% by mole yttria-containing zirconia powder produced by a coprecipitation method and an alumina powder. The sintered body has a bending fracture strength of 1030 MPa or more and 1540 MPa or less as measured by a three-point bending test (span length: 8 mm, crosshead speed: 0.5 mm/min) and a fracture toughness value (KIc) of 6.02 MPa·m$^{0.5}$ or more and 6.90 MPa·m$^{0.5}$ or less as measured by an IF method.

Japanese Unexamined Patent Application Publication No. 2011-178610 reports a sintered body formed by hot isostatic pressing (HIP) of a zirconia powder containing phosphorus, silicon dioxide and alumina. The sintered body has a bending fracture strength of 1100 MPa or more and 1280 MPa or less as measured by a method specified in JIS R 1601 and a fracture toughness value of 6 MPa·m$^{0.5}$ or more and 11 MPa·m$^{0.5}$ or less as measured by a method specified in JIS R 1607.

Sintered bodies, such as zirconia ceramics, tend to have fracture due to generation and development of a crack, that is, brittle fracture. Brittle fracture occurs when a sudden large impact, such as dropping or collision, on a material causes a load exceeding the fracture resistance of the material. Thus, as disclosed in Japanese Unexamined Patent Application Publication No. 2017-226555 and Japanese Unexamined Patent Application Publication No. 2011-178610, the bending fracture strength and fracture toughness values are increased to improve the impact resistance of materials.

On the other hand, when the application of load causes plastic deformation of materials, generation and development of a crack can be reduced by absorbing impact by plastic deformation before brittle fracture occurs.

SUMMARY OF THE INVENTION

It is an object of the present disclosure to provide a sintered body that has high impact resistance by absorbing an impact exceeding the fracture resistance of the sintered body before brittle fracture occurs.

The present invention is defined in the claims, and the gist of the present disclosure is as follows:

[1] A sintered body comprising: zirconia containing a stabilizing element; and a plastic deformation region, wherein the stabilizing element includes at least one rare-earth element other than yttrium, and the stabilizing element content is 1.0% or more by mole and less than 3.0% by mole.

[2] The sintered body according to [1], wherein the stabilizing element content is 1.5% or more by mole and less than 3.0% by mole.

[3] The sintered body according to [1] or [2], wherein the rare-earth element includes at least one selected from the group consisting of neodymium, gadolinium, ytterbium, holmium and samarium.

[4] The sintered body according to any one of [1] to [3], wherein the stabilizing element further includes yttrium.

[5] The sintered body according to [4], wherein the yttrium content is 1.5% or less by mole.

[6] The sintered body according to any one of [1] to [5], wherein ball drop breaking energy is 0.5 J or more.

[7] The sintered body according to any one of [1] to [6], further comprising alumina.

[8] The sintered body according to any one of [1] to [7], further comprising a pigment.

[9] A powder comprising zirconia containing a stabilizing element, wherein the stabilizing element includes at least one rare-earth element other than yttrium, and the stabilizing element content is 1.0% or more by mole and less than 3.0% by mole.

[10] A method for producing a sintered body comprising: using the powder according to [9].

It is an object of the present disclosure to provide a sintered body that has high impact resistance by absorbing an impact exceeding the fracture resistance of the sintered body before brittle fracture occurs and/or a method for producing the sintered body.

BRIEF DESCRIPTION OF THE DRAWINGS

Fig. 1 is a schematic view of a ball drop test using a Du Pont ball drop tester;
Fig. 2 is a schematic view of an example of the center of impact (formation of a depressed portion) after a ball drop test;
Fig. 3 is a schematic view of an example of the vicinity of the center of impact in a known sintered body after the ball drop test;
Fig. 4 is a schematic view of an example of the arrangement of a sample in the ball drop test;
Fig. 5 is a schematic view of a method for measuring the depth of an impact mark;
Fig. 6A is a schematic view of an example of a fracture in the ball drop test;
Fig. 6B is a schematic view of an example of no fracture in the ball drop test;
Fig. 7 is the appearance of a sintered body according to Example 2 after the ball drop test (magnification: 20 times) ;
Fig. 8 is the appearance of an impact mark formed on the sintered body according to Example 2 after the ball drop test (magnification: 50 times);
Fig. 9 is the appearance of a sintered body according to Comparative Example 2 after the ball drop test (magnification: 20 times);
Fig. 10 is the appearance of a sintered body according to Example 11 after measurement of Vickers hardness (magnification: 200 times); and
Fig. 11 is the appearance of the sintered body according to Comparative Example 2 after measurement of Vickers hardness (magnification: 150 times).

DESCRIPTION OF THE PREFERRED EMBODIMENTS

A sintered body according to the present disclosure is described in the following embodiments.

A sintered body according to the present embodiment is a sintered body comprising: zirconia containing a stabilizing element; and a plastic deformation region, wherein the stabilizing element includes at least one rare-earth element other than yttrium, and the stabilizing element content is 1.0% or more by mole and less than 3.0% by mole.

The sintered body according to the present embodiment has a plastic deformation region. For example, the plastic deformation region is a region in which the application of an impact force forms an impact mark. In the present embodiment, "plastic deformation" refers to deformation of a sintered body caused by the application of an external force and remaining after removal of the external force. Plastic deformation is therefore different from deformation that disappears after removal of the external force (elastic deformation) or fracture due to generation and development of a defect, such as a crack, without deformation of a sintered body (brittle fracture). Furthermore, plastic deformation in the present embodiment is different from deformation due to superplasticity, which is extension due to continuous grain boundary sliding when deformed at a constant strain rate in a high-temperature region (for example, in the temperature range of 800°C or more). One reason for improved impact resistance, that is, higher impact resistance of the sintered body according to the present embodiment may be that a plastic deformation region, such as a region in which an impact mark is formed, has the function of absorbing and dispersing energy from an applied impact force. Thus, when an impact force is applied, at least plastic deformation before brittle fracture reduces brittle fracture and improves impact resistance.

The sintered body according to the present embodiment only needs to at least partly have a plastic deformation region (that is, a sintered body with a plastic deformation region) and may be composed mainly of the plastic deformation region or may be composed of the plastic deformation region.

The "impact force" is a force by which energy is transferred to a sintered body, and is particularly a dynamic external force, preferably an external force exceeding the fracture resistance of the sintered body, more preferably a dynamic external force exceeding the fracture resistance of the sintered body, or a dynamic external force by which elastic energy is transferred to the sintered body.

The phrase "application of an impact force", as used herein, refers to the application of energy to at least part of a sintered body, for example, dynamic application of energy to the sintered body due to contact between the sintered body and an object, such as contact between a falling sintered body and the ground or the like or contact between a falling object and the sintered body.

The term "impact mark", as used herein, refers to a mark formed by the application of an impact force to a sintered body, preferably a mark in the sintered body formed by the application of an impact force. In other words, an impact mark is a mark of plastic deformation in a sintered body and is a mark of plastic deformation before fracture. A specific impact mark may be a depressed portion or an uneven portion, or a depressed portion, at the center of impact (described later), or a depressed portion in the application direction of an impact force.

In the present embodiment, a plastic deformation region in a sintered body can be determined by applying an impact force to the sintered body by any method (for example, a dynamic external force that promotes fracture of the sintered body). For example, a plastic deformation region in a sintered body can be determined by applying an impact force to the sintered body and checking for a mark of plastic deformation (particularly, a mark of deformation before fracture), such as a depressed portion or an uneven portion, as an impact mark in the sintered body. In the sintered body according to the present embodiment, an impact mark is formed by plastic deformation and may include a defect due to subsequent brittle fracture (after the formation of the impact mark), such as a crack. On the other hand, after the application of an impact force, the absence of a plastic deformation region can be judged from the presence of only a defect due to brittle fracture, such as a crack, (that is, only a defect without an impact mark due to plastic deformation) or by the presence of only a deformation due to fracture as in Hertzian fracture (that is, only a deformation formed by the development of fracture of an initial crack or the like).

A preferred method for determining a plastic deformation region may be a ball drop test of dropping a 300g falling weight from a drop height of 200 mm at room temperature using a Du Pont ball drop tester according to JIS K 5600 5-3 (hereinafter also referred to simply as a "ball drop test").

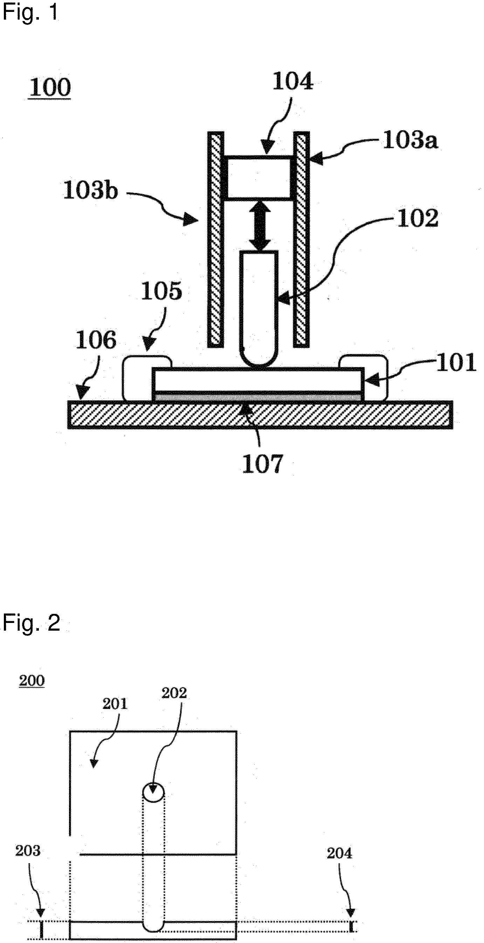

Fig. 1 is a schematic view of a ball drop test using a Du Pont ball drop tester. As illustrated in Fig. 1, in the ball drop test, a sample (101) is placed on a sample stage (106) of a cylindrical ball drop tester. A protective tape (107) is attached to the back surface of the sample (101). A fixing tape (105) is attached to the side surface of the sample (101). A falling weight is composed of a weight (104) and a punch (102), and the punch (102) is placed on the surface of the sample (101). The ball drop test may be performed by dropping a weight (104) from a height corresponding to the drop height from the punch (the height indicated by the double-headed arrow in Fig. 1: 200 mm). The punch (102) has a cylindrical shape with a spherical (hemispherical) tip. The weight (104) is dropped along the guides (103a, 103b) of the Du Pont ball drop tester to apply a desired impact force to the sample (101) via the punch (102).

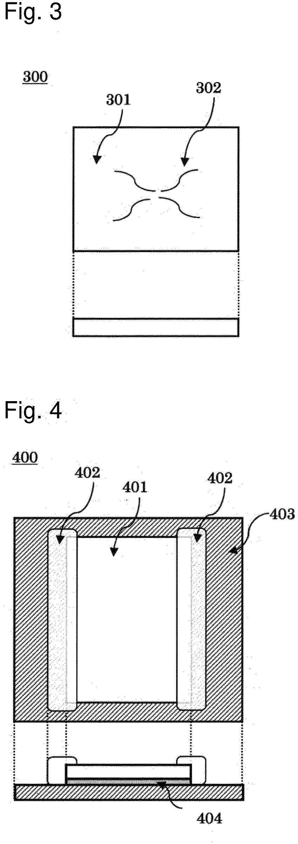

Fig. 2 is a schematic view of the appearance of the sintered body according to the present embodiment after the ball drop test. Fig. 2 shows that the sintered body according to the present embodiment has an impact mark in a region to which an impact force was applied with a falling weight (punch) in the ball drop test (hereinafter also referred to as "the center of impact"). The impact mark in Fig. 2 is a depressed portion formed near the center of impact, and the plastic deformation region can be visually observed. Although not shown, a defect due to brittle fracture, such as a crack, may be present near the depressed portion. In contrast, Fig. 3 is a schematic view of the appearance of a known sintered body after the ball drop test. As illustrated in Fig. 3, the known sintered body has no impact mark at the center of impact and has only a defect due to brittle fracture, such as a crack.

The presence or absence of a plastic deformation region may be determined by visual observation and/or by observation with an optical microscope, or by visual observation. The magnification for observation with an optical microscope may range from 1 to 100 times, preferably 10 to 50 times.

Although not shown, a known sintered body with high fracture toughness has no change in appearance in the ball drop test and has no impact mark. In contrast, a sintered body with a plastic deformation region has plastic deformation before brittle fracture occurs. If no impact mark is observed, the presence or absence of a plastic deformation region may also be determined by repeatedly performing a ball drop test while increasing the drop height until an impact mark can be observed and checking for an impact mark, such as a depressed portion.

To determine the presence or absence of a plastic deformation region with impact resistance acceptable to decorative parts, such as exterior materials of clocks and watches and portable electronic devices, the presence or absence of the plastic deformation region is preferably determined in the present embodiment by dropping a 300-g falling weight from a drop height of 200 mm in a ball drop test.

The ball drop test in the present embodiment can be performed at room temperature (20°C to 30°C) using a Du Pont ball drop tester according to JIS K 5600 5-3. The ball drop test may be performed under the following conditions.

Falling weight:

(shape) a cylindrical punch with a spherical tip 6.35 mm in radius
(mass) 300 g

Drop height: 200 mm
Sample: a plate-like sintered body 40 mm in length x 30 mm in width x 2 mm in thickness with a surface roughness Ra of 0.02 μm or less on both surfaces

The sample is mounted by fixing a surface (a main surface 40 mm in length x 30 mm in width) of the sample to the sample stage of the ball drop tester with a double-sided tape to prevent scattering of pieces of the sample. A fixing tape (protective tape) is attached to a main surface of the sample opposite to the fixed surface in the longitudinal direction of the main surface to fix the sample (Fig. 4). The ball drop test may be performed on the fixed sample. The depth of an impact mark formed in the ball drop test, for example, the maximum depth [mm] of the impact mark (204 in Fig. 2) may be more than 0% and 3.5% or less, or 0.5% or more and 3% or less, of the thickness [mm] of the sintered body. The depth (204) of the impact mark (depressed portion) in Fig. 2 is emphasized.

In the present embodiment, the depth of the impact mark can be measured with a common laser microscope (for example, VK-9500/VK-9510 manufactured by Keyence Corporation). The observation magnification may range from 10 to 50 times, or 20 times, and the laser wavelength may be 408 nm.

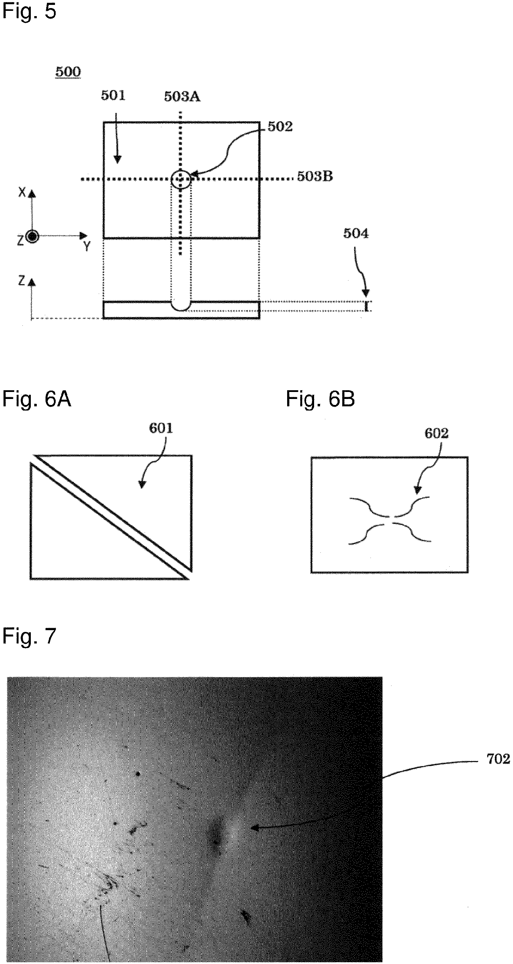

Fig. 5 is a schematic view of an example of a method for measuring the depth of an impact mark. The method for measuring the depth of an impact mark is not limited to the following method. In the measurement of the depth of an impact mark in the present embodiment, from line profiles in a top view in an X-axis direction (503A), which is the maximum radial direction of an almost circular impact mark on a surface on which a ball has dropped, and in a Y-axis direction (503B), which is perpendicular to the X-axis direction and extends on the surface on which the ball has dropped, the difference between the height of the surface on which the ball has dropped and the height of the impact mark surface, that is, the depth (504) of the impact mark is measured in a Z-axis direction perpendicular to the X-axis and the Y-axis. The maximum depth L1 measured in the X-axis direction and the maximum depth L2 measured in the Y-axis direction may be averaged (= (L1 + L2)/2) as the depth of the impact mark of the sample. The condition for measuring the length of the deepest portion may be 0.5 $\mu$m/step. Before the measurement, a standard sample with a known pattern length (for example, a patterned Si substrate) attached to the apparatus may be measured to ensure the analysis accuracy.

Such measurements of line profiles, the deepest portion in the Z-axis direction, and the like can be analyzed by image analysis using analysis software or the like provided with a laser microscope (for example, software name: VK-H1A9VK Analyzer Version 3.0.1.0).

Zirconia in the sintered body according to the present embodiment contains a stabilizing element. The stabilizing element is an element for stabilizing zirconia and may be a rare-earth element. The zirconia in the sintered body according to the present embodiment contains at least one rare-earth element other than yttria as a stabilizing element. The rare-earth element is preferably other than cerium (Ce). The rare-earth element preferably contains at least one selected from the group consisting of neodymium (Nd), samarium (Sm), gadolinium (Gd), ytterbium (Yb) and holmium (Ho), more preferably at least one selected from the group consisting of samarium, gadolinium, ytterbium and holmium, still more preferably at least one selected from the group consisting of samarium, gadolinium and ytterbium. The rare-earth element preferably contains at least one of gadolinium and ytterbium in terms of easy sintering with a small amount of stabilizing element. Due to the tendency of higher b* value of the sintered body, the rare-earth element preferably includes samarium. Due to the tendency of higher ball drop strength (hereinafter also referred to as "ball drop breaking energy"), the rare-earth element preferably includes gadolinium. Due to the tendency of higher resistance to low temperature degradation, the rare-earth element preferably includes ytterbium. The zirconia in the sintered body according to the present embodiment may contain two or more rare-earth elements. For example, the zirconia in the sintered body according to the present embodiment preferably contains gadolinium and ytterbium.

In the zirconia in the sintered body according to the present embodiment, the stabilizing element may further include yttrium.

The content of stabilizing element (hereinafter also referred to as the "stabilizing element content") may be such that the zirconia is partially stabilized. The stabilizing element content is more than 0% by mole, 1.0% or more by mole, 1.5% or more by mole or 1.8% or more by mole, and less than 3% by mole, 2.8% or less by mole or 2.5% or less by mole, and more than 0% by mole and less than 3% by mole, preferably more than 0% by mole and 2.8% or less by mole, more preferably 1.8% or more by mole and 2.8% or less by mole, on an oxide basis. In the present embodiment, the stabilizing element content is the ratio (% by mole) of the total of stabilizing elements on an oxide basis to the total of zirconia and stabilizing elements on an oxide basis. For example, the stabilizing element content of a sintered body containing zirconia containing samarium and yttrium (samarium and yttrium stabilized zirconia sintered body) can be determined by $\{ (Sm_2O_3 + Y_2O_3)/ (Sm_2O_3 + Y_2O_3 + ZrO_2)\} \times 100$ (% by mole).

The stabilizing element on an oxide basis may be $Nd_2O_3$ for neodymium, $Sm_2O_3$ for samarium, $Gd_2O_3$ for gadolinium, $Yb_2O_3$ for ytterbium, $Ho_2O_3$ for holmium and $Y_2O_3$ for yttrium, for example.

Each stabilizing element content of the sintered body according to the present embodiment (when the stabilizing element is neodymium or the like, the stabilizing element content is also referred to as the "neodymium content" or the like) is not particularly limited, provided that the stabilizing element content is satisfied. In other words, the stabilizing element content of the sintered body according to the present embodiment refers to the total of all stabilizing element contents in the sintered body. As the stabilizing element content of the sintered body according to the present embodiment, the neodymium content may be 1.5% or more by mole, 2.0% or more by mole or 2.5% or more by mole, and less than 3.0% by mole, and the samarium content may be 1.5% or more by mole, 2.0% or 2.5% or more by mole, and less than 3.0% by mole.

Furthermore, in the sintered body according to the present embodiment, more preferably, the gadolinium content may be 1.0% or more by mole or 1.5% or more by mole, and less than 3.0% by mole or 2.8% or less by mole, the ytterbium content may be 1.0% or more by mole or 1.5% or more by mole, and less than 3.0% by mole or 2.8% or less by mole, and the holmium content may be 1.0% or more by mole or 1.5% or more by mole, and less than 3.0% by mole or 2.8% or less by mole.

In a sintered body containing zirconia containing yttrium and at least one of neodymium, samarium, gadolinium, ytterbium and holmium as stabilizing elements, the stabilizing element content for at least one of neodymium, samarium, gadolinium, ytterbium and holmium may be more than 0% by mole, and the stabilizing element content may be 1.5% or more by mole, 2.0% or more by mole or 2.2% or more by mole, and less than 3.0% by mole.

Each stabilizing element content in the present embodiment is the ratio (% by mole) of each stabilizing element on an oxide basis to the total of zirconia and stabilizing elements on an oxide basis. For example, the neodymium content of a sintered body containing zirconia containing neodymium and yttrium (neodymium and yttrium stabilized zirconia sintered body) can be determined by $\{Nd_2O_3/(Nd_2O_3 + Y_2O_3 + ZrO_2)\} \times 100$ (% by mole), and the samarium content of a sintered body containing zirconia containing samarium and yttrium (samarium and yttrium stabilized zirconia sintered body) can be determined by $\{Sm_2O_3/(Sm_2O_3 + Y_2O_3 + ZrO_2)\} \times 100$ (% by mole) .

The sintered body according to the present embodiment may contain a pigment. The pigment is a substance with the function of coloring the zirconia sintered body. Such a sintered body has a color tone different from the original color tone of zirconia. Combining a color tone derived from zirconia and a color tone derived from a pigment, a sintered body having a desired color tone can be obtained. The pigment may color the zirconia sintered body white.

The pigment in the sintered body according to the present embodiment is at least one of elements with the function of coloring zirconia other than rare-earth elements and compounds thereof, and is preferably a metal element, more preferably a transition metal element, for example. More specifically, for example, the pigment is more preferably at least one element selected from the group consisting of, for example, titanium (Ti), vanadium (V), chromium (Cr), manganese (Mn), iron (Fe), cobalt (Co), nickel (Ni), copper (Cu) and zinc (Zn) or a compound thereof, still more preferably at least one element selected from the group consisting of iron, cobalt and manganese or a compound thereof.

The pigment in the sintered body according to the present embodiment is more preferably a metal oxide with a perovskite structure or a spinel structure, still more preferably a transition metal oxide with a perovskite structure or a spinel structure.

A metal oxide with a perovskite structure may be an oxide represented by $ABO_3$, wherein A denotes at least one selected from the group consisting of calcium (Ca), strontium (Sr), barium (Ba) and bismuth (Bi), and B denotes at least one selected from the group consisting of vanadium, chromium, manganese, iron, cobalt, nickel and aluminum (Al).

A metal oxide with a spinel structure may be an oxide represented by $AB_2O_4$, wherein A and B independently denote at least one selected from the group consisting of calcium, strontium, barium, bismuth, vanadium, chromium, manganese, iron, cobalt, nickel and aluminum, preferably an oxide represented by $AB_2O_4$. A specific metal oxide with a spinel structure may be at least one selected from the group consisting of $CoAl_2O_4$, $Fe_3O_4$ ($Fe^{2+}Fe^{3+}_2O_4$), $Mn_3O_4$ ($Mn^{2+}Mn^{3+}_2O_4$), $SrAl_2O_4$ and $CaAl_2O_4$.

The sintered body according to the present embodiment with a lower pigment content is more easily plastically deformed. The pigment content is more than 0% by mass, preferably 0.001% or more by mass. Although a sintered body with a plastic deformation region may have any pigment content, the upper limit of the pigment content is 5% or less by mass, less than 3% by mass, 2.5% or less by mass, 2.0% or less by mass, 1.5% or less by mass, 1.0% or less by mass or 0.7% or less by mass, for example. The pigment content can be determined as the ratio of the total mass of the pigment on an oxide basis to the mass of the sintered body on an oxide basis. The pigment on an oxide basis may be $Co_3O_4$ for cobalt, $Fe_2O_3$ for iron, $MnO_2$ for manganese and $ZnO$ for zinc. For example, when the sintered body according to the present embodiment contains a metal oxide with a perovskite structure as a pigment and zirconia containing neodymium and yttrium as stabilizing elements, the pigment content can be determined by $\{ABO_3/(Nd_2O_3 + Y_2O_3 + ZrO_2 + ABO_3)\} \times 100$ (% by mass). When the sintered body according to the present embodiment contains a metal oxide with a spinel structure as a pigment and zirconia containing neodymium and yttrium as stabilizing elements, the pigment content can be determined by $\{AB_2O_4/(Nd_2O_3 + Y_2O_3 + ZrO_2 + AB_2O_4)\} \times 100$ (% by mass) .

The sintered body according to the present embodiment may contain alumina ($Al_2O_3$). This tends to improve mechanical characteristics, for example, static strength. The sintered body according to the present embodiment does not necessarily contain alumina and therefore has an alumina content of 0% or more by mass. When the sintered body according to the present embodiment contains alumina, the alumina content may be more than 0% by mass and less than 30% by mass, preferably more than 0% by mass and 25% or less by mass, more preferably 0.005% or more by mass and 20% or less by mass. The alumina content may be 0% or more by mass, more than 0% by mass, 0.005% or more by mass, 0.5% or more by mass or 1% or more by mass, and 30% or less by mass, 25% or less by mass, 20% or less by mass, 15% or less by mass or 10% or less by mass. The alumina content may be determined as the mass ratio of aluminum in terms of $Al_2O_3$ to the total of zirconia, stabilizing elements on an oxide basis and aluminum in terms of $Al_2O_3$. For example, the alumina content of a sintered body containing alumina and zirconia containing neodymium and yttrium as stabilizing elements can be determined by $\{Al_2O_3/(ZrO_2 + Nd_2O_3 + Y_2O_3 + Al_2O_3)\} \times 100$ (% by mass).

The alumina content of a sintered body containing a pigment M can be determined as the mass ratio of aluminum in terms of $Al_2O_3$ to the total of zirconia, stabilizing elements on an oxide basis, a pigment $M_xO_y$ on an oxide basis and aluminum in terms of $Al_2O_3$. For example, the alumina content of a sintered body containing alumina, a pigment, and zirconia containing neodymium and yttrium as stabilizing elements can be determined by $\{Al_2O_3/(ZrO_2 + Nd_2O_3 + Y_2O_3 + M_xO_y + Al_2O_3)\}$ x 100 (% by mass).

Alumina ($Al_2O_3$) has a great influence on the mechanical characteristics of a sintered body and has almost no effect of coloring zirconia. Thus, in the present embodiment, the pigment does not include alumina, that is, an oxide of aluminum that does not form a composite oxide with a metal element or the like.

The sintered body according to the present embodiment is preferably a sintered body that contains zirconia containing a stabilizing element and that contains zirconia containing a stabilizing element as a matrix (base material), that is, a zirconia sintered body or a partially stabilized zirconia sintered body. The mass ratio of zirconia containing a stabilizing element to the sintered body according to the present embodiment (hereinafter also referred to as the "zirconia content") is preferably 65% or more by mass, 70% or more by mass, more than 75% by mass, 80% or more by mass or 95% or more by mass. The sintered body has a zirconia content of 100% or less mass, and a sintered body composed only of zirconia containing a stabilizing element has a zirconia content of 100% by mass. The zirconia content can be determined as the ratio of the total mass of zirconia and stabilizing elements on an oxide basis to the mass of the sintered body on an oxide basis. For example, the zirconia content of a sintered body containing alumina, pigment and zirconia containing neodymium and yttrium as stabilizing elements can be determined by $\{(ZrO_2)/(ZrO_2 + Nd_2O_3 + Y_2O_3 + Al_2O_3)\}$ x 100 (% by mass). When the sintered body further contains a pigment M, the zirconia content can be determined by $\{(ZrO_2)/(ZrO_2 + Nd_2O_3 + Y_2O_3 + M_xO_y + Al_2O_3)\}$ x 100 (% by mass), wherein $M_xO_y$ denotes an oxide of the pigment M.

A powder according to the present embodiment may contain, in addition to alumina, for example, an oxide that has great influence on the mechanical characteristics of the sintered body and has almost no effect of coloring zirconia, such as, at least one selected from the group consisting of silica ($SiO_2$), titania ($TiO_2$), gallium oxide ($Ga_2O_3$) germanium oxide ($GeO_2$), niobium oxide ($Nb_2O_5$) or tantalum oxide ($Ta_2O_5$).

Although the sintered body according to the present embodiment may contain incidental impurities, such as hafnia ($HfO_2$), the sintered body preferably does not contain materials other than stabilizing elements, zirconia, alumina, an optional pigment, and incidental impurities. In the above formula for calculating the content of stabilizing elements, pigments and other additives, the mass of HfO2 is assumed to be included in the section of $ZrO_2$.

The sintered body according to the present embodiment preferably has a high density and preferably has a relative density of 98% or more, more preferably 99% or more and 100% or less.

In the present embodiment, the actual density can be determined using the Archimedes' method and is the mass determined by mass measurement relative to the volume determined using the Archimedes' method. In the present embodiment, the relative density can be determined from the ratio of the actual density to the theoretical density. In the present embodiment, the theoretical density ($g/cm^3$) may be determined from the ratio of the unit cell mass (g) to the unit cell volume ($cm^3$) of zirconia in the sintered body on the assumption that the crystal phase of the zirconia is entirely tetragonal. The unit cell volume may be determined from the lattice constant, which is calculated from an interplanar spacing determined using the Bragg equation from $2\theta$ of each peak top of an XRD peak corresponding to a tetragonal (004) plane (hereinafter also referred to as "$T_{004}$") and an XRD peak corresponding to a tetragonal (220) plane (hereinafter also referred to as "$T_{220}$") in a powder X-ray diffraction pattern measured under the following conditions. The unit cell mass may be determined as the total mass of cations (zirconium atoms, hafnium atoms, stabilizing element atoms) and anions (oxygen atoms) contained in the unit cell using the results of the composition analysis of the sintered body.

The crystal phase of zirconia in the sintered body according to the present embodiment preferably contains at least a tetragonal phase and may be composed of at least one of a tetragonal phase, a cubic phase and a monoclinic phase.

In the present embodiment, a powder X-ray diffraction pattern of the sintered body can be measured with a common X-ray diffractometer (for example, apparatus name: X'pert PRO MPD manufactured by Spectris Co., Ltd.).

The measurement conditions may be as follows:

Radiation source: CuK$\alpha$ radiation ($\lambda$ = 1.5405 angstroms)
Tube voltage: 45 kV
Tube current: 40 mA
High-speed detector: X'Celerator + Ni filter
Micro-optical system: monocapillary diameter 0.1 mm
Measurement angle: 70 to 80 degrees
Goniometer: radius 240 mm

In the measurement, the diffraction intensity of $T_{004}$ is determined as the integrated intensity of an XRD peak with a peak top at $2\theta = 72.5 \pm 1$ degrees, and the diffraction intensity of $T_{220}$ is determined as the integrated intensity of an XRD peak with a peak top at $2\theta = 74 \pm 1$ degrees.

The shape of the sintered body according to the present embodiment may be at least one selected from the group consisting of spherical, approximately spherical, elliptical, discoidal, cylindrical, cubic, rectangular parallelepiped, polyhedral and approximately polyhedral. Furthermore, any shape may be used to achieve the desired purpose for various applications.

The sintered body according to the present embodiment preferably has a ball drop strength of 0.5 J or more, more preferably 0.6 J or more. The ball drop strength is a measure of impact resistance, and a higher ball drop strength indicates higher impact resistance. The sintered body has a ball drop strength of 5 J or less, 2 J or less or 1 J or less, for example.

$$\texttt{Ball drop strength (J) = mass of falling weight (g) x}$$

$$\texttt{drop height (mm) x gravity acceleration (m/s}^2\texttt{) x 10}^{-6}$$

The gravity acceleration may be 9.8 m/s$^2$.

The ball drop strength can be measured by the same method as in the ball drop test except that the drop height is the following height.

Drop height : 50 to 500 mm

Fracture can be identified from a sample broken into two or more pieces (Fig. 6A). A crack that does not extend from one end to the other end (Fig. 6B) indicates no fracture. In the case of no fracture at a specific drop height in the ball drop test, visual observation may be continued in the same manner in the ball drop test while increasing the drop height to 500 mm in increments of a constant height (for example, 50 mm) until fracture occurs. Alternatively, the ball drop test may be continued with different falling weights instead of different drop heights. For example, in the case of no fracture even at a drop height of 500 mm, a higher ball drop strength can be measured by increasing the mass of the falling weight from 300 g to 500 g and performing the ball drop test again at a drop height of 500 mm.

The sintered body according to the present embodiment may have any Vickers hardness (Hv), which may be 8 GPa or more, preferably 10 GPa or more, more preferably 11 GPa or more, in terms of the scratch resistance of the surface of the sintered body. The Vickers hardness may be 15 GPa or less, 13 GPa or less or 12 GPa or less.

In the present embodiment, the Vickers hardness can be measured by a method according to JIS R1610: 2003. The measurement conditions for the Vickers hardness may be as follows:

Sample:

(sample thickness) 1.5 ± 0.5 mm
(measurement surface roughness) Ra ≤ 0.02 μm

Measurement load: 10 kgf or 20 kgf

The measurement can be performed with a common Vickers tester (for example, MV-1 manufactured by Matsuzawa Co., Ltd.) equipped with a pyramidal diamond indenter. In the measurement, an indenter is statically pressed into the surface of a sample to form an indentation mark on the surface of the sample, and the diagonal length of the indentation mark is visually measured. The Vickers hardness can be calculated from the diagonal length using the following equation.

$$\texttt{Hv = F/\{d}^2\texttt{/2sin(}\alpha\texttt{/2)\} x 9.8 x 10}^{-3}$$

In this equation, Hv denotes the Vickers hardness (GPa), F denotes the measurement load (10 kgf or 20 kgf), d denotes the diagonal length of an indentation mark (mm), and α denotes the angle between opposite faces of the indenter (136 degrees).

A measure of the fracture resistance of the sintered body in the present embodiment may be a fracture toughness value. The fracture toughness value refers to a fracture toughness value (MPa·m$^{0.5}$) measured by a method specified in JIS R 1607. JIS R 1607 specifies two methods for measuring fracture toughness: the Indentation fracture method(IF method) and the Single Edge Precracked Beam method(SEPB method). The IF method is a simple measurement method but tends to give a larger measured value than the SEPB method. Thus, in the present embodiment, the fracture toughness value measured by the SEPB method cannot be compared as an absolute value with the fracture toughness value measured by the IF method.

The fracture toughness value of the sintered body according to the present embodiment measured by the IF method may be 13 MPa·m$^{0.5}$ or more or 14 MPa·m$^{0.5}$, and 20 MPa·m$^{0.5}$ or less or 18 MPa·m$^{0.5}$ or less. The fracture toughness value measured by the SEPB method may be 5 MPa·m$^{0.5}$ or more or 6 MPa·m$^{0.5}$ or more, and 15 MPa·m$^{0.5}$ or less or 13 MPa·m$^{0.5}$ or less.

In the present embodiment, the bending strength can be measured in a three-point bending test according to JIS R 1601. The bending strength of the sintered body according to the present embodiment is 900 MPa or more or 1000 MPa or more, and 1500 MPa or less or 1300 MPa or less.

The sintered body according to the present embodiment may have any color tone. For the sintered body without a pigment, the lightness L* in the CIE1976 (L*a*b*) color space is 70 or more, 75 or more or 80 or more. The upper limit of the lightness L* is 100 or less.

The lightness L* can be measured by a method according to JIS Z 8722 using a common spectrophotometer (for example, CM-700d manufactured by Konica Minolta, Inc.). The measurement conditions for lightness L* are described below as an example. The measurement preferably uses a black plate as the background (black background measurement).

Light source: D-65 light source
Viewing angle: 10 degrees
Measurement mode: SCI

The color tone is evaluated in a discoidal sintered body with a diameter of 20 mm and a thickness of 2.7 mm as a sample. The surface to be measured is mirror-polished (Ra ≤ 0.02 μm). The effective area to evaluate the color tone may have a diameter of 10 mm.

The sintered body according to the present embodiment, particularly the sintered body without a pigment, preferably has the lightness L* described above. In this case, the chroma a* and b* of the sintered body according to the present embodiment may be -3 ≤ a* ≤ 0 and -2 ≤ b* ≤ 25, respectively.

For the color tone of the sintered body according to the present embodiment containing a pigment, L* may be 0 or more and 100 or less, a* may be -5 or more and 15 or less, and b* may be -30 or more and 40 or less.

The sintered body according to the present embodiment can be applied to known sintered bodies, particularly zirconia sintered bodies, such as structural materials, optical materials, and dental materials, and can be used as members requiring relatively high impact resistance, such as covers for ornaments, clocks and watches, cases and other accessories, and exterior members for portable electronic devices, such as mobile phones.

A method for producing the sintered body according to the present embodiment is described below.

The sintered body according to the present embodiment may be produced by any method, provided that the sintered body satisfies the above requirements. An example of the method for producing the sintered body according to the present embodiment may be a production method including the step of sintering a green body containing a stabilizing element source and zirconia.

The green body to be subjected to the above step (hereinafter also referred to as the "sintering step") is a green body (green compact) containing the stabilizing element source and zirconia. The green body may have the same composition as the sintered body.

The stabilizing element source may be a compound containing a stabilizing element and may be a compound containing at least one element selected from the group consisting of neodymia, samaria, gadolinia, ytterbia and holmia, and their precursors neodymium, samarium, gadolinium, ytterbium and holmium (when the stabilizing element is neodymium or the like, the stabilizing element source is hereinafter also referred to as the "neodymium source" or the like). The sintered body according to the present embodiment may further contain, as a stabilizing element source, yttria or a compound containing yttrium as a precursor of yttria.

The neodymium source may be at least one of neodymia (neodymium oxide) and a neodymium compound serving as a precursor of neodymia, for example, at least one selected from the group consisting of neodymium chloride, neodymia and neodymium carbonate, preferably neodymia.

The samarium source may be at least one of samaria (samarium oxide) and a samarium compound serving as a precursor of samaria, for example, at least one selected from the group consisting of samarium chloride, samaria and samarium carbonate, preferably samaria.

The gadolinium source may be at least one of gadolinia (gadolinium oxide) and a gadolinium compound serving as a precursor of gadolinia, for example, at least one selected from the group consisting of gadolinium chloride, gadolinia and gadolinium carbonate, preferably gadolinia.

The ytterbium source may be at least one of ytterbia (ytterbium oxide) and an ytterbium compound serving as a precursor of ytterbia, for example, at least one selected from the group consisting of ytterbium chloride, ytterbia and ytterbium carbonate, preferably ytterbium chloride.

The holmium source may be at least one of holmia (holmium oxide) and a holmium compound serving as a precursor of holmia, for example, at least one selected from the group consisting of holmium chloride, holmia and holmium carbonate, preferably holmia.

The yttrium source may be at least one of yttria (yttrium oxide) and an yttrium compound serving as a precursor of yttria, for example, at least one selected from the group consisting of yttrium chloride, yttria and yttrium carbonate, preferably yttria.

The stabilizing element source content of the green body may be the same as the stabilizing element content of the desired sintered body.

The green body may contain an alumina source. The alumina source is at least one of alumina ($Al_2O_3$) and a compound containing aluminum (Al) serving as a precursor of alumina, for example, at least one selected from the group consisting of aluminum chloride, aluminum sulfate, aluminum nitrate, aluminum hydroxide and alumina, preferably alumina.

The alumina source content of the green body may be the same as the alumina content of the desired sintered body.

The green body may contain a binder to improve shape stability. The binder may be an organic binder used for forming ceramics, for example, at least one selected from the group consisting of acrylic resins, polyolefin resins, waxes and plasticizers. The binder content may be 25% or more by volume and 65% or less by volume of the green body. Furthermore, the binder constitutes more than 0% by mass and 10% or less by mass of 100% by mass of the green body.

The green body may have any shape depending on the purpose in consideration of shrinkage due to sintering, for example, at least one selected from the group consisting of spherical, approximately spherical, elliptical, discoidal, cylindrical, cubic, rectangular parallelepiped, polyhedral and approximately polyhedral.

The green body may be produced by any method, for example, by mixing zirconia, a stabilizing element source and optionally at least one of a pigment source and an alumina source to make a mixture (hereinafter, also referred to as "raw material composition") and forming the mixture by any method. The mixture may be called "raw material composition". Zirconia containing the stabilizing element may be used instead of or in addition to the zirconia and the stabilizing element source. The raw material composition used for producing the green body may have the same composition as the target molded body. For example, the raw material composition is, powder comprising: zirconia containing a stabilizing element; wherein the stabilizing element includes at least one rare-earth element other than yttrium, and the stabilizing element content is 1.0% or more by mole and less than 3.0% by mole. The powder can be used in a method for producing a sintered body, characterized in that it is used, or preferably in a method for producing a sintered body according to the present embodiment, which is characterized in that the powder is used.

When zirconia containing the stabilizing element is used as the zirconia, the stabilizing element may be added to the zirconia by any method. For example, a hydrous zirconia sol may be mixed with a stabilizing element source with a desired stabilizing element content, drying and calcining the mixture, and washing the mixture with water.

If necessary, the green body may contain a pigment source. The pigment source may be at least one of a pigment and a precursor thereof. The precursor of the pigment may be a compound containing an element with the function of coloring zirconia, preferably a compound containing a metal element, for example, at least one selected from the group consisting of oxides, hydroxides, oxyhydroxides, carbonates, oxalates, sulfates, acetates, nitrates, chlorides, fluorides, bromides and iodides of metals, preferably at least one selected from the group consisting of oxides, hydroxides, oxyhydroxides and carbonates of metals. A specific precursor of the pigment may be at least one selected from the group consisting of calcium oxide, manganese oxide, alumina, iron oxide and cobalt oxide.

When the pigment is a metal oxide with a perovskite structure or a spinel structure, the pigment can be produced, for example, by mixing at least one element selected from the group consisting of oxides, hydroxides, oxyhydroxides, carbonates, oxalates, sulfates, acetates, nitrates, chlorides, fluorides, bromides and iodides of transition metals with at least one element selected from the group consisting of oxides, hydroxides, oxyhydroxides, carbonates, oxalates, sulfates, acetates, nitrates, chlorides, fluorides, bromides and iodides of transition metals and by firing the mixture at 1200°C to 1500°C in the air. A preferred pigment source may be at least one selected from the group consisting of $CoAl_2O_4$, $Fe_2O_3$, $Mn_3O_4$, ZnO and $SrAl_2O_4$. A pigment source for coloring the sintered body white may be $CaAl_2O_4$. The pigment source may be a commercial pigment source, for example, the following pigment sources in the present embodiment. The pigment source is at least one selected from the group consisting of $CoAl_2O_4$, $Fe_2O_3$, ZnO, $Mn_3O_4$, $SrAl_2O_4$ and $CoAl_2O_4$.

The pigment source content of the green body may be the same as the pigment content of the desired sintered body.

The mixing method may be any mixing method, preferably at least one of dry mixing and wet mixing, more preferably wet mixing, still more preferably wet mixing in a ball mill.

The forming method may be a known forming method for forming a mixed powder into a green compact, preferably at least one selected from the group consisting of uniaxial pressing, isostatic pressing, injection molding, extrusion, tumbling granulation and slip casting, more preferably at least one of uniaxial pressing and isostatic pressing, still more preferably at least one of cold isostatic pressing and uniaxial pressing (powder press forming).

In the sintering step, the green body is sintered to form a sintered body. The sintering method may be any sintering method, for example, a known sintering method, such as pressureless sintering, pressure sintering or vacuum sintering. A preferred sintering method may be pressureless sintering, and for ease of operation the sintering method is preferably pressureless sintering alone. Thus, the sintered body according to the present embodiment can be produced as a pressureless sintered body. Pressureless sintering is a method of sintering a green body (or a calcined body) by simple heating without applying an external force to the green body.

The sintering temperature in pressureless sintering may be 1250°C or more and 1600°C or less, preferably 1300°C or more and 1580°C or less, or 1300°C or more and 1560°C or less. The sintering atmosphere may be at least one of the air atmosphere and the oxygen atmosphere, preferably the air atmosphere.

EXAMPLES

The present embodiment is further described in the following examples. However, the present embodiment is not limited to these examples.

(Identifying Plastic Deformation Region)

The presence or absence of a plastic deformation region of a sintered body sample was determined in a ball drop test using a Du Pont ball drop tester according to JIS K 5600 5-3 (apparatus name: H-50 manufactured by Toyo Seiki Seisaku-Sho, Ltd.). Test conditions are as follows: Falling weight:

> (shape) a cylindrical punch with a spherical tip 6.35 mm in radius
> (mass) 300 g, that is, a rectangular parallelepiped weight with a mass of 300 g made of stainless steel 80 mm in width x 20 mm in thickness x 30 mm in height
> Drop height: 200 mm
> Sample: a plate-like sintered body 40 mm in length x 30 mm in width x 2 mm in thickness with a surface roughness Ra $\leq$ 0.02 $\mu$m on both surfaces (surfaces 40 mm in length x 30 mm in width, main surfaces)

The sample was mounted by fixing a surface (a surface 40 mm in length x 30 mm in width) of the sample to the sample stage of the ball drop tester with a double-sided tape to prevent scattering of pieces of the sample. A tape was attached to a surface of the sample opposite to the fixed surface in the longitudinal direction of the surface to fix the sample. The punch was placed such that the falling weight drops near the center of the fixed sample in the ball drop test.

(Measurement of Ball Drop Strength)

The ball drop strength was measured in the same manner as in the ball drop test for identifying the plastic deformation region except that the drop height was changed. More specifically, the state of the sample after dropping the falling weight was visually observed, and the ball drop strength at the drop height at which the sample was broken was calculated using the following equation.

$$\text{Ball drop strength (J)} = \text{mass of falling weight (g)} \times$$
$$\text{drop height (mm)} \times \text{gravity acceleration } (9.8 \text{ m/s}^2) \times 10^{-6}$$

Fracture was judged from a sample broken into two or more pieces. A sample having extremely small broken pieces, such as chipping, but maintaining its plate-like shape was not regarded as fracture. In the case of no fracture at a specific drop height in the ball drop test, the drop height was increased from 50 mm to 500 mm in increments of 50 mm until fracture occurred in the ball drop test. In the case of no fracture even at a drop height of 500 mm, the mass of the falling weight was increased from 300 g to 500 g and from 500 g to 1 kg before the ball drop test was performed again at a drop height of 500 mm. For convenience, a sample without fracture in the ball drop test with a falling weight mass of 1 kg at a drop height of 500 mm was considered to have a ball drop strength of > 5 J (more than 5 J).

(Vickers Hardness)

The Vickers hardness was measured with a common Vickers tester (apparatus name: MV-1 manufactured by Matsuzawa Co., Ltd.) equipped with a pyramidal diamond indenter.

The indenter was statically pressed into the surface of the sample at a measurement load of 10 kgf. The diagonal length of an indentation mark formed on the surface of the sample was visually measured. The Vickers hardness (GPa) was calculated from the diagonal length using the equation described above.

(Density)

The actual density of the sintered body sample (g/cm$^3$) was determined as the ratio of the volume measured using the Archimedes' method to the mass measured by the mass measurement. Before the measurement, the mass of the sintered body after drying was measured, and then the sintered body was boiled in water for one hour as pretreatment. The theoretical density (g/cm$^3$) was determined from the ratio of the unit cell mass (g) to the unit cell volume (cm$^3$) of zirconia in the sintered body on the assumption that the crystal phase of the zirconia was entirely tetragonal. The unit cell volume may be determined from the lattice constant, which is calculated from an interplanar spacing determined using the Bragg equation from $2\theta$ of each peak top of an XRD peak corresponding to a tetragonal (004) plane (hereinafter also referred to as "$T_{004}$") and an XRD peak corresponding to a tetragonal (220) plane (hereinafter also referred to as "$T_{220}$") in a powder X-ray diffraction pattern measured under the following conditions.

The measurement conditions may be as follows:

Radiation source: CuK$\alpha$ radiation ($\lambda$ = 1.5405 angstroms)
Tube voltage: 45 kV
Tube current: 40 mA
High-speed detector: X'Celerator + Ni filter
Micro-optical system: monocapillary diameter 0.1 mm
Measurement angle: 70 to 80 degrees
Goniometer: radius 240 mm

(Fracture Toughness)

The fracture toughness value of the sintered body sample was measured by a method specified in JIS R 1607.

(Bending Strength)

The bending strength of the sintered body sample was measured in a three-point bending test according to JIS R 1601.

(Measurement of Color Tone)

The color tone of the sintered body sample was measured by a method according to JIS Z 8722. A common spectrophotometer (apparatus name: CM 700d manufactured by Konica Minolta, Inc.) was used for the measurement, and black background measurement was performed using a black plate as the background. The measurement conditions were as follows:

Light source: D-65 light source
Viewing angle: 10 degrees
Measurement mode: SCI

The sintered body sample was a discoidal sample with a diameter of 20 mm and a thickness of 2.7 mm. A surface of the sintered body sample was mirror-polished (Ra $\leq$ 0.02 $\mu$m) and was used as an evaluation surface to evaluate the color tone. The effective area to evaluate the color tone had a diameter of 10 mm.

(Pigment)

The following pigments were used in Examples 3, 15 to 21 and 23 to 26.

Pigment 1: $CoAl_2O_4$ (NF-2800, Nikken Co., Ltd.)
Pigment 2: $Fe_2O_3$ (iron (III) oxide, grade 1, Kanto Chemical Co., Inc.)
Pigment 3: ZnO (zinc oxide, special grade, Kishida Chemical Co., Ltd.)
Pigment 4: $SrAl_2O_4$ (strontium aluminate 2N, Kojundo Chemical Laboratory Co., Ltd.)
Pigment 5: $Mn_3O_4$ (Brownox, Tosoh Corporation)
A pigment 6 used in Example 22 was synthesized in the following manner.

Pigment 6: $CaAl_2O_4$

A calcium oxide (CaO) powder and an alumina ($Al_2O_3$) powder were mixed in an agate mortar at Ca:Al = 1:2 (mole ratio) and were then heated at 1200°C for 2 hours in the air to prepare $CaAl_2O_4$.

EXAMPLE 1

An aqueous zirconium oxychloride was subjected to hydrolysis reaction to prepare a hydrous zirconia sol. Samaria and yttria were mixed with the hydrous zirconia sol at a samarium concentration of 1.7% by mole and at an yttrium concentration of 1.1% by mole. After mixing, the mixture was dried in the air and was calcined in the air at 1150°C for 2 hours to prepare a calcined powder of samarium and yttrium stabilized zirconia. The calcined powder was washed with pure water and was dried to prepare a zirconia powder composed of samarium and yttrium stabilized zirconia with a samarium content of 1.7% by mole and an yttrium content of 1.1% by mole.

Pure water was added to the zirconia powder to prepare a slurry. The slurry was ground and mixed in a ball mill for 48 hours using zirconia balls with a diameter of 10 mm as a grinding medium. The ground and mixed slurry was dried in the air at 110°C and was sieved to remove coarse particles with an aggregate size of more than 180 $\mu$m, thereby preparing a zirconia powder according to the present example composed of samarium and yttrium stabilized zirconia with a samarium content of 1.7% by mole and an yttrium content of 1.1% by mole.

The zirconia powder was filled in a plate-like mold with a length of 40 mm and a width of 30 mm and was subjected to uniaxial pressing at a forming pressure of 50 MPa and cold isostatic pressing (CIP) at a forming pressure of 196 MPa to form a plate-like green body. The green body was sintered under the following conditions and was ground and polished to a thickness of 1.8 mm, thereby preparing a sintered body according to the present example composed of samarium and yttrium stabilized zirconia with a samarium content of 1.7% by mole and an yttrium content of 1.1% by mole. The sintering conditions are described below. The sintered body had a relative density of 99%.

Sintering method: pressureless sintering
Sintering atmosphere: in the air
Sintering temperature: 1550°C
Sintering time: 2 hours

EXAMPLE 2

A sintered body according to the present example composed of samarium and yttrium stabilized zirconia with a samarium content of 0.5% by mole and an yttrium content of 1.5% by mole was prepared in the same manner as in Example 1 except that samaria and yttria were added to hydrous zirconia at a samarium content of 0.5% by mole and an yttrium content of 1.5% by mole. The sintered body had a relative density of 100% and a bending strength of 1052 MPa.

EXAMPLE 3

A zirconia powder composed of samarium and yttrium stabilized zirconia with a samarium content of 1.5% by mole and an yttrium content of 0.5% by mole was prepared in the same manner as in Example 1 except that samaria and yttria were added to hydrous zirconia at a samarium content of 1.5% by mole and an yttrium content of 0.5% by mole.

The zirconia powder, an $Al_2O_3$ powder and the pigments 1 to 3 were added to pure water at an $Al_2O_3$ content of 5% by mass, a $CoAl_2O_4$ content of 0.0040% by mass, an $Fe_2O_3$ content of 0.013% by mass and a ZnO content of 0.0063% by mass to prepare a slurry. The slurry was ground and mixed for 22 hours in a ball mill using zirconia balls with a diameter of 10 mm as a grinding medium. The ground and mixed slurry was dried to prepare a zirconia powder according to the present example composed of samarium and yttrium stabilized zirconia containing 5% by mass of $Al_2O_3$, 0.040% by mass of $CoAl_2O_4$, 0.013% by mass of $Fe_2O_3$ and 0.0063% by mass of ZnO with the remainder having a samarium content of 1.5% by mole and an yttrium content of 0.5% by mole.

The powder was granulated into powder granules and was filled in a plate-like mold with a length of 40 mm and a width of 30 mm and was subjected to uniaxial pressing at a forming pressure of 50 MPa and cold isostatic pressing (CIP) at a forming pressure of 196 MPa to form a plate-like green body. The green body was sintered under the following conditions to prepare a sintered body according to the present example composed of samarium and yttrium stabilized zirconia containing 5% by mass of $Al_2O_3$, 0.0040% by mass of $CoAl_2O_4$, 0.013% by mass of $Fe_2O_3$ and 0.0063% by mass of ZnO with the remainder having a samarium content of 1.5% by mole and an yttrium content of 0.5% by mole. The sintering conditions are as follows:

Sintering method: pressureless sintering

Sintering atmosphere: in the air
Sintering temperature: 1400°C
Sintering time: 2 hours

EXAMPLE 4

A sintered body according to the present example composed of gadolinium and yttrium stabilized zirconia with a gadolinium content of 0.5% by mole and an yttrium content of 1.5% by mole was prepared in the same manner as in Example 1 except that gadolinia was used instead of samaria, and gadolinia and yttria were added to hydrous zirconia at a gadolinium content of 0.5% by mole and an yttrium content of 1.5% by mole. The sintered body had a relative density of 100% and a bending strength of 1044 MPa.

EXAMPLE 5

A sintered body according to the present example composed of gadolinium and yttrium stabilized zirconia with a gadolinium content of 1.5% by mole and an yttrium content of 0.5% by mole was prepared in the same manner as in Example 1 except that gadolinia was used instead of samaria, and gadolinia and yttria were added to hydrous zirconia at a gadolinium content of 1.5% by mole and an yttrium content of 0.5% by mole. The sintered body had a relative density of 100% and a bending strength of 1042 MPa.

EXAMPLE 6

A sintered body according to the present example composed of ytterbium and yttrium stabilized zirconia with an ytterbium content of 0.9% by mole and an yttrium content of 1.1% by mole was prepared in the same manner as in Example 1 except that ytterbium (III) chloride hexahydrate was used instead of samaria, and ytterbium (III) chloride hexahydrate and yttria were added to hydrous zirconia at an ytterbium content of 0.9% by mole and an yttrium content of 1.1% by mole. The sintered body had a relative density of 99%.

EXAMPLE 7

A sintered body according to the present example composed of holmium and yttrium stabilized zirconia with a holmium oxide content of 1.0% by mole and an yttrium content of 1.0% by mole was prepared in the same manner as in Example 1 except that holmium oxide was used instead of samaria, and holmium oxide and yttria were added to hydrous zirconia at a holmium oxide content of 1.0% by mole and an yttrium content of 1.0% by mole. The sintered body had a relative density of 100% and a bending strength of 1056 MPa.

EXAMPLE 8

A sintered body according to the present example composed of holmium and yttrium stabilized zirconia with a holmium oxide content of 0.4% by mole and an yttrium content of 1.5% by mole was prepared in the same manner as in Example 1 except that holmium oxide was used instead of samaria, holmium oxide and yttria were added to hydrous zirconia at a holmium content of 0.4% by mole and an yttrium content of 1.5% by mole, and sintering was performed at 1450°C.

EXAMPLE 9

A sintered body according to the present example composed of gadolinium and yttrium stabilized zirconia with a gadolinium content of 0.3% by mole and an yttrium content of 1.5% by mole was prepared in the same manner as in Example 1 except that gadolinia was used instead of samaria, and gadolinia and yttria were added to hydrous zirconia at a gadolinium content of 0.3% by mole and an yttrium content of 1.5% by mole. The sintered body had a relative density of 100%.

EXAMPLE 10

A sintered body according to the present example composed of samarium stabilized zirconia with a samarium content of 2.6% by mole was prepared in the same manner as in Example 1 except that yttria was not used, samaria was added to hydrous zirconia at a samarium content of 2.6% by mole, and sintering was performed at 1400°C.

EXAMPLE 11

A sintered body according to the present example composed of gadolinium stabilized zirconia with a gadolinium content of 2.0% by mole was prepared in the same manner as in Example 1 except that only gadolinia was used instead of samaria and yttria, gadolinia was added to hydrous zirconia at a gadolinium content of 2.0% by mole, and sintering was performed at 1450°C. The sintered body had a relative density of 100% and a bending strength of 913 MPa.

EXAMPLE 12

A sintered body according to the present example composed of holmium stabilized zirconia with a holmium content of 2.0% by mole was prepared in the same manner as in Example 1 except that only holmium oxide was used instead of samaria and yttria, holmium oxide was added to hydrous zirconia at a holmium oxide content of 2.0% by mole, and sintering was performed at 1450°C. The sintered body had a relative density of 100%.

EXAMPLE 13

A sintered body according to the present example composed of gadolinium and ytterbium stabilized zirconia with a gadolinium content of 1.5% by mole and an yttrium content of 0.7% by mole was prepared in the same manner as in Example 1 except that gadolinia and ytterbium (III) chloride hexahydrate were used instead of samaria and yttria, and gadolinia and ytterbium (III) chloride hexahydrate were added to hydrous zirconia at a gadolinium content of 1.5% by mole and an ytterbium content of 0.7% by mole.

EXAMPLE 14

A sintered body according to the present example composed of gadolinium and ytterbium stabilized zirconia with a gadolinium content of 1.0% by mole and an yttrium content of 1.0% by mole was prepared in the same manner as in Example 1 except that gadolinia and ytterbium (III) chloride hexahydrate were used instead of samaria and yttria, and gadolinia and ytterbium (III) chloride hexahydrate were added to hydrous zirconia at a gadolinium content of 1.0% by mole and an ytterbium content of 1.0% by mole. The sintered body had a bending strength of 1044 MPa.

COMPARATIVE EXAMPLE 1

A sintered body according to the present example composed of yttrium stabilized zirconia with an yttrium content of 2.8% by mole was prepared in the same manner as in Example 1 except that samaria was not used, and yttria was added to hydrous zirconia at an yttrium content of 2.8% by mole. The sintered body had a relative density of 100%.

COMPARATIVE EXAMPLE 2

A sintered body according to the present example composed of yttrium stabilized zirconia with an yttrium content of 2.0% by mole was prepared in the same manner as in Example 1 except that samaria was not used, yttria was added to hydrous zirconia at an yttrium content of 2.0% by mole, and sintering was performed at 1450°C.

COMPARATIVE EXAMPLE 3

A sintered body according to the present example composed of gadolinium stabilized zirconia with a gadolinium content of 3.4% by mole was prepared in the same manner as in Example 1 except that only gadolinia was used instead of samaria and yttria, gadolinia was added to hydrous zirconia at a gadolinium content of 3.4% by mole, and sintering was performed at 1450°C.

COMPARATIVE EXAMPLE 4

A sintered body according to the present example composed of ytterbium stabilized zirconia with an ytterbium content of 3.6% by mole was prepared in the same manner as in Example 1 except that only ytterbium (III) chloride hexahydrate was used instead of samaria and yttria, ytterbium (III) chloride hexahydrate was added to hydrous zirconia at an ytterbium content of 3.6% by mole, and sintering was performed at 1450°C.
The following table shows the evaluation results for the examples and comparative examples.

Table 1

| | Stabilizing element content [mol%] | | | | | | Sintering temperature [°C] | Density [g/cm3] | Fracture toughness [MPa·m$^{0.5}$] | Vickers hardness [GPa] | Formation of impact mark | Ball drop breaking energy [J] |
|---|---|---|---|---|---|---|---|---|---|---|---|---|
| | Sm | Gd | Yb | Ho | Y | Total | | | | | | |
| Example 1 | 1.7 | - | - | - | 1.1 | 2.8 | 1550 | 6.14 | 13.6 | 11.5 | O | 1.18 |
| Example 2 | 0.5 | - | - | - | 1.5 | 2.0 | 1550 | 6.13 | 15.2 | 11.5 | O | 1.03 |
| Example 3 | 1.5 | - | - | - | 0.5 | 2.0 | 1400 | 5.97 | 14.2 | 11.3 | O | 1.18 |
| Example 4 | - | 0.5 | - | - | 1.5 | 2.0 | 1550 | 6.14 | 14.7 | 11.5 | O | 1.03 |
| Example 5 | - | 1.5 | - | - | 0.5 | 2.0 | 1550 | 6.19 | 15.3 | 11.3 | O | 1.47 |
| Example 6 | - | - | 0.9 | - | 1.1 | 2.0 | 1550 | 6.16 | 13.9 | 11.5 | O | 0.88 |
| Example 7 | - | - | - | 1.0 | 1.0 | 2.0 | 1550 | 6.17 | 13.6 | 11.8 | O | 0.88 |
| Example 8 | - | - | - | 0.4 | 1.5 | 1.9 | 1450 | 6.12 | 15.0 | 12.6 | O | 1.18 |
| Example 9 | - | 0.3 | - | - | 1.5 | 1.8 | 1550 | 6.11 | 15.5 | 11.1 | O | 1.18 |
| Example 10 | 2.6 | - | - | - | - | 2.6 | 1400 | 6.20 | 14.2 | 11.1 | O | 0.88 |
| Example 11 | - | 2.0 | - | - | - | 2.0 | 1450 | 6.19 | 15.4 | 10.8 | O | 0.74 |
| Example 12 | - | - | - | 2.0 | - | 2.0 | 1450 | 6.23 | 13.1 | 11.8 | O | 0.74 |
| Example 13 | - | 1.5 | 0.7 | - | - | 2.2 | 1550 | 6.24 | 14.1 | 11.7 | O | 0.59 |
| Example 14 | - | 1.0 | 1.0 | - | - | 2.0 | 1550 | 6.26 | 14.4 | 11.6 | O | 0.74 |
| Comparative example 1 | - | - | - | - | 2.8 | 2.8 | 1550 | 6.10 | 4.5 | 12.4 | x | 0.29 |
| Comparative example 2 | - | - | - | - | 2.0 | 2.0 | 1450 | 6.11 | 12.5 | 12.2 | x | 0.44 |
| Comparative example 3 | - | 3.4 | - | - | - | 3.4 | 1450 | 6.26 | 6.4 | 12.9 | x | 0.29 |
| Comparative example 4 | - | - | 3.6 | - | - | 3.6 | 1450 | 6.25 | 4.0 | 12.8 | x | 0.29 |

EP 4 074 673 A1

16

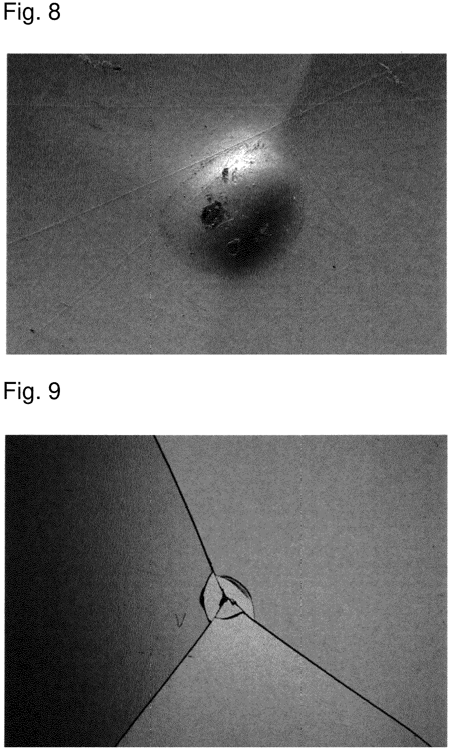

In the column of "Formation of impact mark" in Table 1, "O" indicates that an impact mark was observed after the ball drop test, and "X" indicates that no impact mark was observed. Figs. 7 and 8 show the appearance of the sintered body after the ball drop test in Example 2. Figs. 7 and 8 show that an impact mark (depressed portion) was formed without fracture, such as a crack, in the region in contact with the falling weight in the ball drop test, that is, an impact mark (depressed portion) is visually observed as a mark of plastic deformation. All the sintered bodies of Examples 1 to 14 visually had an impact mark as a mark of plastic deformation and had ball drop breaking energy of 0.5 J or more. These sintered bodies visually had an impact mark as a mark of plastic deformation as in Fig. 8.

The sintered bodies of Examples 1 to 14 had a fracture toughness value of 13 $MPa \cdot m^{0.5}$ or more in the IF method and had high fracture toughness values. The fracture toughness values measured by the SEPB method were 7.9 $MPa \cdot m^{0.5}$ (Example 2), 7.4 $MPa \cdot m^{0.5}$ (Example 4), 8.8 $MPa \cdot m^{0.5}$ (Example 5), 6.1 $MPa \cdot m^{0.5}$ (Example 9) and 10.7 $MPa \cdot m^{0.5}$ (Example 11), all of which were lower than the fracture toughness values measured by the IF method.

The sintered bodies according to Comparative Examples 1 and 2 containing only yttrium as a stabilizing element and the sintered bodies according to Comparative Examples 3 and 4 containing 3.4% or more by mole of the stabilizing element had a lower fracture toughness value and lower ball drop breaking energy than Examples 1 to 14. The ball drop test also showed no plastic deformation region.

Fig. 9 shows the appearance of the sintered body according to Comparative Example 1 observed with an optical microscope (magnification: 20 times) after the ball drop test. The sintered body according to Comparative Example 1 containing only yttria as a stabilizing element had cracks and was broken without forming an impact mark due to plastic deformation.

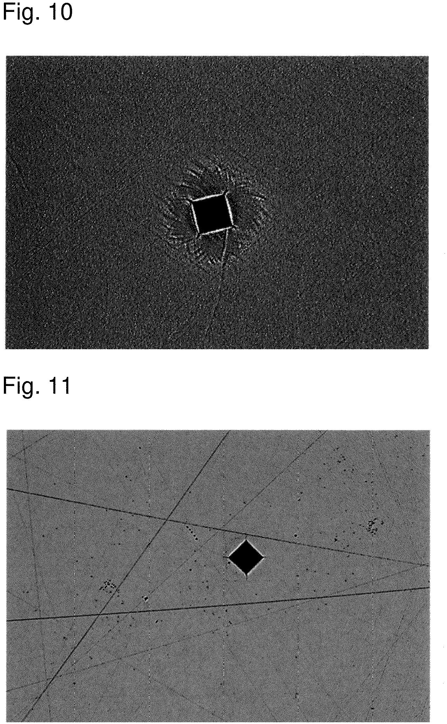

Figs. 10 and 11 show the appearance of the sintered bodies according to Example 11 and Comparative Example 2 around an impression formed by pressing the indenter to measure Vickers hardness observed with an optical microscope (magnification: 200 times (Example 11) and 50 times (Comparative Example 2)). The sintered body according to Comparative Example 2 had a rhombic impression. In contrast, the sintered body according to Example 11 had a rhombic impression and a wrinkled pattern around the impression.

Thus, the sintered bodies according to the present examples had high fracture strength, fracture toughness and impact resistance.

EXAMPLE 15

A sintered body according to the present example composed of gadolinium and yttrium stabilized zirconia containing 5% by mass of $Al_2O_3$, 0.004% by mass of $CoAl_2O_4$, 0.0125% by mass of $Fe_2O_3$ and 0.00625% by mass of ZnO with the remainder having a gadolinium content of 1.5% by mole and an yttrium content of 0.5% by mole was prepared in the same manner as in Example 3 except that the zirconia powder prepared in Example 5 was used.

EXAMPLE 16

A sintered body according to the present example composed of gadolinium and yttrium stabilized zirconia containing 0.75% by mass of $Al_2O_3$ and 3.5% by mass of $CoAl_2O_4$ with the remainder having a gadolinium content of 1.5% by mole and an yttrium content of 0.5% by mole was prepared in the same manner as in Example 15 except that 0.75% by mass of $Al_2O_3$ and 3.5% by mass of $CoAl_2O_4$ were used, $Fe_2O_3$ and ZnO were not added, and sintering was performed at 1400°C.

EXAMPLE 17

A sintered body according to the present example composed of samarium and yttrium stabilized zirconia containing 0.75% by mass of $Al_2O_3$ and 3.5% by mass of $CoAl_2O_4$ with the remainder having a samarium content of 1.5% by mole and an yttrium content of 0.5% by mole was prepared in the same manner as in Example 3 except that 0.75% by mass of $Al_2O_3$ and 3.5% by mass of $CoAl_2O_4$ were used, $Fe_2O_3$ and ZnO were not added, and sintering was performed at 1400°C.

EXAMPLE 18

A sintered body according to the present example composed of gadolinium and yttrium stabilized zirconia containing 0.75% by mass of $Al_2O_3$ and 3.5% by mass of $CoAl_2O_4$ with the remainder having a gadolinium content of 1.5% by mole and an yttrium content of 0.5% by mole was prepared in the same manner as in Example 15 except that 20% by mass of $Al_2O_3$ was used, and $CoAl_2O_4$, $Fe_2O_3$ and ZnO were not added.

EXAMPLE 19

A zirconia powder composed of gadolinium and yttrium stabilized zirconia with a gadolinium content of 1.4% by mole and an yttrium content of 0.4% by mole was prepared in the same manner as in Example 1 except that gadolinia was used instead of samaria, and gadolinia and yttria were added to hydrous zirconia at a gadolinium content of 1.4% by mole and an yttrium content of 0.4% by mole. A sintered body according to the present example composed of gadolinium and yttrium stabilized zirconia containing 10% by mass of $Al_2O_3$ and 0.10% by mass of $SrAl_2O_4$ with the remainder having a gadolinium content of 1.4% by mole and an yttrium content of 0.4% by mole was prepared in the same manner as in Example 15 except that the zirconia powder was used, 10% by mass of $Al_2O_3$ was used, 0.10% by mass of $SrAl_2O_4$ was used, $CoAl_2O_4$, $Fe_2O_3$ and ZnO were not added, and sintering was performed at 1400°C.

EXAMPLE 20

A zirconia powder composed of gadolinium and yttrium stabilized zirconia with a gadolinium content of 1.3% by mole and an yttrium content of 0.4% by mole was prepared in the same manner as in Example 1 except that gadolinia was used instead of samaria, and gadolinia and yttria were added to hydrous zirconia at a gadolinium content of 1.3% by mole and an yttrium content of 0.4% by mole. A sintered body according to the present example composed of gadolinium and yttrium stabilized zirconia containing 20% by mass of $Al_2O_3$ and 0.40% by mass of $Fe_2O_3$ with the remainder having a gadolinium content of 1.3% by mole and an yttrium content of 0.4% by mole was prepared in the same manner as in Example 15 except that the zirconia powder was used, 20% by mass of $Al_2O_3$ was used, 0.40% by mass of $Fe_2O_3$ was used, $CoAl_2O_4$ and ZnO were not added, and sintering was performed at 1450°C.

EXAMPLE 21

A sintered body according to the present example composed of gadolinium and yttrium stabilized zirconia containing 20% by mass of $Al_2O_3$ and 0.10% by mass of $CoAl_2O_4$ with the remainder having a gadolinium content of 1.3% by mole and an yttrium content of 0.4% by mole was prepared in the same manner as in Example 20 except that 0.10% by mass of $CoAl_2O_4$ was used, and $Fe_2O_3$ was not added.

EXAMPLE 22

A sintered body according to the present example composed of gadolinium and yttrium stabilized zirconia containing 10% by mass of $Al_2O_3$ and 0.10% by mass of $CaAl_2O_4$ with the remainder having a gadolinium content of 1.4% by mole and an yttrium content of 0.4% by mole was prepared in the same manner as in Example 19 except that the pigment 6 $CaAl_2O_4$ was used instead of $SrAl_2O_4$, and sintering was performed at 1450°C.

EXAMPLE 23

A sintered body according to the present example composed of samarium and yttrium stabilized zirconia containing 10% by mass of $Al_2O_3$ and 0.10% by mass of $SrAl_2O_4$ with the remainder having a samarium content of 1.5% by mole and an yttrium content of 0.5% by mole was prepared in the same manner as in Example 3 except that 10% by mass of $Al_2O_3$ and 0.10% by mass of $SrAl_2O_4$ were used, $CoAl_2O_4$, $Fe_2O_3$ and ZnO were not added, and sintering was performed at 1550°C.

EXAMPLE 24

The pigment 5 and pure water were added to the zirconia powder prepared in Example 6 at a $Mn_3O_4$ content of 0.5% by mass to prepare a slurry. The slurry was ground and mixed for 48 hours in a ball mill using zirconia balls with a diameter of 10 mm as a grinding medium. The ground and mixed slurry was dried to prepare a zirconia powder according to the present example composed of ytterbium and yttrium stabilized zirconia containing 0.50% by mass of $Mn_3O_4$ with the remainder having an ytterbium content of 1.1% by mole and an yttrium content of 0.9% by mole.
A sintered body according to the present example composed of ytterbium and yttrium stabilized zirconia containing 0.50% by mass of $Mn_3O_4$ with the remainder having an ytterbium content of 1.1% by mole and an yttrium content of 0.9% by mole was prepared in the same manner as in Example 1 except that the powder was used, and sintering was performed at 1400°C.

EXAMPLE 25

A zirconia powder composed of holmium and yttrium stabilized zirconia with a holmium content of 0.3% by mole and an yttrium content of 1.5% by mole was prepared in the same manner as in Example 1 except that holmium oxide was used instead of samaria and holmium oxide and yttria were added to hydrous zirconia at a holmium content of 0.3% by mole and an yttrium content of 1.5% by mole. A sintered body according to the present example composed of holmium and yttrium stabilized zirconia containing 3.5% by mass of $CoAl_2O_4$ with the remainder having a holmium content of 0.3% by mole and an yttrium content of 1.5% by mole was prepared in the same manner as in Example 16 except that the zirconia powder was used, and $Al_2O_3$ was not used.

EXAMPLE 26

The pigment 3 and pure water were added to the zirconia powder prepared in Example 10 at an $Fe_2O_3$ content of 0.50% by mass to prepare a slurry. The slurry was ground and mixed for 48 hours in a ball mill using zirconia balls with a diameter of 10 mm as a grinding medium. The ground and mixed slurry was dried to prepare a zirconia powder according to the present example composed of samarium stabilized zirconia containing 0.50% by mass of $Fe_2O_3$ with the remainder having a samarium content of 2.6% by mole.
A sintered body according to the present example composed of samarium stabilized zirconia containing 0.50% by mass of $Fe_2O_3$ with the remainder having a samarium content of 2.6% by mole was prepared in the same manner as in Example 1 except that the powder was used, and sintering was performed at 1350°C.
The following table shows the evaluation results for these examples together with the evaluation results for Example 3.

Table 2

| | Stabilizing element content [mol%] | | | | | | Sintering temperature [°C] | Additive [% by weight] | | | | | | | Color tone (D65) | | | | Impact mark | Falling ball fracture energy [J] |
|---|---|---|---|---|---|---|---|---|---|---|---|---|---|---|---|---|---|---|---|---|
| | Sm | Gd | Yb | Ho | Y | Total | | $Al_2O_3$ | $CoAl_2O_4$ | $CaAl_2O_4$ | $SrAl_2O_4$ | $Fe_2O_3$ | ZnO | $MnO_2$ | L* | a* | b* | Color | | |
| Example 3 | 1.5 | - | - | - | 0.5 | 2.0 | 1550 | 5.0 | 0.0040 | - | - | 0.013 | 0.0063 | - | 91.97 | 0.55 | 6.33 | Ivory | O | 1.18 |
| Example 15 | - | 1.5 | - | - | 0.5 | 2.0 | 1550 | 5.0 | 0.0040 | - | - | 0.013 | 0.0063 | - | 90.8 | 0.86 | 3.34 | Light gray | O | 1.32 |
| Example 16 | - | 1.5 | - | - | 0.5 | 2.0 | 1400 | 0.75 | 3.5 | - | - | - | - | - | 50.28 | 2.3 | -28.3 | Blue | O | 1.03 |
| Example 17 | 1.5 | - | - | - | 0.5 | 2.0 | 1400 | 0.75 | 3.5 | - | - | - | - | - | 51.54 | 1.35 | -29.36 | Blue | O | 1.74 |
| Example 18 | - | 1.5 | - | - | 0.5 | 2.0 | 1550 | 20 | - | - | - | - | - | - | 97.96 | -0.33 | 1.36 | White | O | 1.03 |
| Example 19 | - | 1.4 | - | - | 0.4 | 2.0 | 1400 | 10 | - | - | 0.10 | - | - | - | 98.15 | -0.27 | 0.54 | Grayish white | O | 0.88 |
| Example 20 | - | 1.3 | - | - | 0.4 | 1.7 | 1450 | 20 | - | - | - | 0.40 | - | - | 90.58 | 0.78 | 14.09 | Light yellow | O | 1.18 |
| Example 21 | - | 1.3 | - | - | 0.4 | 1.7 | 1450 | 20 | 0.10 | - | - | - | - | - | 85.87 | 0.15 | 0.01 | Gray | O | 1.18 |
| Example 22 | - | 1.4 | - | - | 0.4 | 2.0 | 1450 | 10 | - | 0.10 | - | - | - | - | 97.76 | -0.18 | 0.67 | White | O | 1.18 |
| Example 23 | 0.5 | - | - | - | 1.5 | 2.0 | 1550 | 10 | - | - | 0.10 | - | - | - | 97.69 | 0.18 | 2.94 | White | O | 0.74 |
| Example 24 | - | - | 0.9 | - | 1.1 | 2.0 | 1400 | - | - | - | - | - | - | 0.44 | 45.21 | 0.1 | -0.67 | Black | O | 1.03 |
| Example 25 | - | - | - | 0.3 | 1.5 | 1.8 | 1400 | - | 3.5 | - | - | - | - | - | 50.96 | 2.46 | -28.99 | Blue | O | 1.03 |
| Example 26 | 2.6 | - | - | - | - | 2.6 | 1350 | - | - | - | - | 0.50 | - | - | 58.78 | 8.45 | 14.52 | Brown | O | 0.74 |

The sintered bodies according to the examples and comparative examples had the color tones shown in Table 2. This shows that different color tones were obtained by changing the type of stabilizing element and the addition amount of pigment.

REFERENCE SYMBOLS

| 100: | Schematic view of ball drop test |
|---|---|
| 101: | Sintered body |
| 102: | Punch |
| 103a, 103b: | Guide |
| 104: | Weight |
| 105: | Fixing tape |
| 106: | Sample stage of ball drop tester |
| 107: | Protective tape |
| 200: | Sintered body according to the present embodiment after ball drop test |
| 201: | Sintered body |
| 202: | Impact mark (depressed portion) |
| 203: | Depth of impact mark (depressed portion) |
| 300: | Known sintered body after ball drop test |
| 301: | Sintered body |
| 302: | Defect (crack) |
| 400: | Schematic view of arrangement of sintered body on sample stage of ball drop tester |
| 401: | Sintered body |
| 402: | Fixing tape |
| 403: | Sample stage of ball drop tester |
| 404: | Double-sided tape (protective tape) |
| 500: | Schematic view of method for measuring depth of impact mark |
| 501: | Sintered body |
| 502: | Impact mark (depressed portion) |
| 503a, b: | Line profiles |
| 504: | Depth of impact mark |
| 601: | Sintered body broken into pieces |
| 602: | Defect (crack) |
| 702: | Impact mark (depressed portion) |

**Claims**

1. A sintered body comprising:

   zirconia containing a stabilizing element; and
   a plastic deformation region,
   wherein the stabilizing element includes at least one rare-earth element other than yttrium, and the stabilizing element content is 1.0% or more by mole and less than 3.0% by mole.

2. The sintered body according to Claim 1, wherein the stabilizing element content is 1.5% or more by mole and less than 3.0% by mole.

3. The sintered body according to Claim 1 or 2,
   wherein the rare-earth element includes at least one selected from the group consisting of neodymium, gadolinium, ytterbium, holmium and samarium.

4. The sintered body according to any one of Claims 1 to 3, wherein the stabilizing element further includes yttrium.

5. The sintered body according to Claim 4, wherein the yttrium content is 1.5% or less by mole.

6. The sintered body according to any one of Claims 1 to 5, wherein ball drop breaking energy is 0.5 J or more.

7. The sintered body according to any one of Claims 1 to 5, comprising alumina.

8. The sintered body according to any one of Claims 1 to 6, comprising a pigment.

9. A powder comprising zirconia containing a stabilizing element, wherein the stabilizing element includes at least one rare-earth element other than yttrium, and the stabilizing element content is 1.0% or more by mole and less than 3.0% by mole.

10. A method for producing a sintered body comprising using the powder according to Claim 9.

Fig. 1

Fig. 2

Fig. 3

Fig. 4

Fig. 5

Fig. 6A

Fig. 6B

Fig. 7

Fig. 8

Fig. 9

Fig. 10

Fig. 11

Europäisches
Patentamt

European
Patent Office

Office européen
des brevets

# EUROPEAN SEARCH REPORT

Application Number

EP 22 16 7570

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | JP H09 188562 A (SHINAGAWA REFRACTORIES CO) 22 July 1997 (1997-07-22) | 1-10 | INV. C04B35/486 |
| Y | * claims 1-4 * * paragraphs [0001], [0006], [0008], [0038] – [0040], [0044] * * examples 5-8, 10-12, 14-17, 21-22; table 1 * | 3 | C01G25/02 C04B35/488 C04B35/626 |
| X | JP H07 187774 A (SHINAGAWA REFRACTORIES CO) 25 July 1995 (1995-07-25) * claims 1, 6 * * examples 8, 13; table 1 * | 1-10 | |
| X | US 2015/315086 A1 (KAWAMURA KIYOTAKA [JP] ET AL) 5 November 2015 (2015-11-05) | 1,2,4-10 | |
| Y | * claims 1, 9 * * paragraphs [0127] – [0131] * * examples 7, 8, 12; table 1 * | 3 | |
| X,P | JP 2021 091602 A (TOSOH CORP) 17 June 2021 (2021-06-17) * claims 1, 3, 5, 6, 11 * * paragraphs [0060], [0112] – [0114] * | 1,4-10 | TECHNICAL FIELDS SEARCHED (IPC) C04B C01G |

The present search report has been drawn up for all claims

| Place of search | Date of completion of the search | Examiner |
|---|---|---|
| The Hague | 22 August 2022 | Buffet, Noemie |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons
............................................................
& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 22 16 7570

This annex lists the patent family members relating to the patent documents cited in the above-mentioned European search report.
The members are as contained in the European Patent Office EDP file on
The European Patent Office is in no way liable for these particulars which are merely given for the purpose of information.

22-08-2022

| Patent document cited in search report | | Publication date | Patent family member(s) | | Publication date |
|---|---|---|---|---|---|
| JP H09188562 | A | 22-07-1997 | JP | 3736649 B2 | 18-01-2006 |
| | | | JP | H09188562 A | 22-07-1997 |
| JP H07187774 | A | 25-07-1995 | NONE | | |
| US 2015315086 | A1 | 05-11-2015 | CN | 104884408 A | 02-09-2015 |
| | | | CN | 108358627 A | 03-08-2018 |
| | | | EP | 2939993 A1 | 04-11-2015 |
| | | | EP | 3838248 A1 | 23-06-2021 |
| | | | KR | 20150099708 A | 01-09-2015 |
| | | | US | 2015315086 A1 | 05-11-2015 |
| | | | WO | 2014104236 A1 | 03-07-2014 |
| JP 2021091602 | A | 17-06-2021 | NONE | | |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2017226555 A

- JP 2011178610 A